# EUROPEAN PATENT APPLICATION

(11) **EP 4 692 464 A1**
(43) Date of publication of application: **11.02.2026**
(21) Application number: 23930895.0
(22) Date of filing: 08.12.2023
(51) Int. Cl.: E02F 9/20

(54) **WORK MACHINE**

(30) Priority: 29.03.2023 JP 2023054355
(71) Applicant: Hitachi Construction Machinery Co., Ltd., Tokyo 110-0015 (JP)
(72) Inventor: ANAHARA, Keiichirou, Tsuchiura-shi, Ibaraki 300-0013 (JP); HAGIWARA, Naoki, Tsuchiura-shi, Ibaraki 300-0013 (JP); TAKAHASHI, Yuuri, Tsuchiura-shi, Ibaraki 300-0013 (JP); WACHI, Hidekazu, Tsuchiura-shi, Ibaraki 300-0013 (JP)
(74) Representative: MERH-IP Matias Erny Reichl Hoffmann Patentanwälte PartG mbB
(86) International application number: PCT/JP2023/044084
(87) International publication number: WO 2024/202271

(57) **Abstract**

The work machine includes a controller that controls the operation of the work device according to the operation of the indoor operation device when the operation mode is switched to the onboard operation mode, and controls the operation of the work device according to the operation of the remote control device when the operation mode is switched to the remote control mode. And, when the first mode selecting operation is performed to switch from the onboard operation mode to the remote control mode by the mode selecting operation part, the time until the controller enables the operation of the work device by the remote control device is longer in the second time when the first mode selecting operation is performed during the operation of the prime mover than in the first time when the first mode selecting operation is performed during the non-operation of the prime mover.

## Description

### Technical Field

The present invention relates to work machines such as hydraulic excavators that can be remotely operated.

### Background Art

Disaster recovery sites often contain various obstacles such as debris, earth and sand, and driftwood. In such sites with various obstacles, it is necessary to prevent secondary disasters, and work machines that can be remotely operated, as described in Patent Document 1, are required.

### Prior Art Documents

### Patent Documents

Patent Document 1: JP-H7-71281-A

### Summary of the Invention

### Problems to be Solved by the Invention

In the hydraulic excavator of Patent Document 1, when operating the excavator remotely, it is necessary to operate the mode selecting operation part (remote-manual selecting operation switch) installed on the body to switch the operation mode from onboard operation mode to remote control mode. If the mode selecting operation part is operated while the prime mover such as the engine is running, the machine may start moving remotely before the operator has sufficiently distanced themselves from the body.

The purpose of the present invention is to prevent the work machine from starting to move remotely before the operator who operated the mode selecting operation part has sufficiently distanced themselves from the machine.

### Means for Solving the Problems

A work machine according to one aspect of the present invention includes a work device, a prime mover as a power source, an indoor operation device installed inside the operating room, and a mode selecting operation part that switches between an onboard operation mode where the operation of the work device by the indoor operation device is effective and a remote control mode where the operation of the work device by the remote control device is effective. Furthermore, the work machine includes a controller that controls the operation of the work device according to the operation of the indoor operation device when the operation mode is switched to the onboard operation mode by the mode selecting operation part, and controls the operation of the work device according to the operation of the remote control device when the operation mode is switched to the remote control mode by the mode selecting operation part. And, when the first mode selecting operation is performed to switch from the onboard operation mode to the remote control mode by the mode selecting operation part, the time until the controller enables the operation of the work device by the remote control device is longer in the second time when the first mode selecting operation is performed during the operation of the prime mover than in the first time when the first mode selecting operation is performed during the non-operation of the prime mover.

### Advantages of the Invention

According to the present invention, it is possible to prevent the work machine from starting to move remotely before the operator who operated the mode selecting operation part has sufficiently distanced themselves from the machine.

### Brief Description of the Drawings

[Fig. 1] Fig. 1 is a diagram showing a hydraulic excavator and its remote control system.
[Fig. 2] Fig. 2 is a schematic view of the interior of the operating room as seen from behind the driver's seat looking forward.
[Fig. 3] Fig. 3 is a diagram showing the control system that controls each part of the hydraulic excavator.
[Fig. 4] Fig. 4 is a flowchart showing an example of the process flow of the vehicle body controller from the time the first mode selecting operation is performed until the hydraulic actuator can be operated by the wireless control device.
[Fig. 5] Fig. 5 is a flowchart showing an example of the process flow of the vehicle body controller from the time the second mode selecting operation is performed until the hydraulic actuator can be operated by the indoor operation device.
[Fig. 6] Fig. 6 is a time chart showing the control content executed from the state where onboard operation is possible to the state where remote control is possible.
[Fig. 7] Fig. 7 is a time chart showing the control content executed from the state where remote control is possible to the state where onboard operation is possible.
[Fig. 8] Fig. 8 is a diagram showing the configuration of the notification system mounted on the hydraulic excavator according to the second embodiment.
[Fig. 9] Fig. 9 is a flowchart showing an example of the process flow for setting the warning invalid flag executed by the vehicle body controller.
[Fig. 10] Fig. 10 is a diagram showing the configuration of the remote control system and notification system according to the third embodiment.
[Fig. 11] Fig. 11 is a flowchart showing an example of the process flow executed by the controller according to the third embodiment.

### Modes for Carrying Out the Invention

Referring to the drawings, the work machine according to the embodiment of the present invention will be described. In this embodiment, an example where the work machine is a crawler-type hydraulic excavator will be described.

### <First Embodiment>

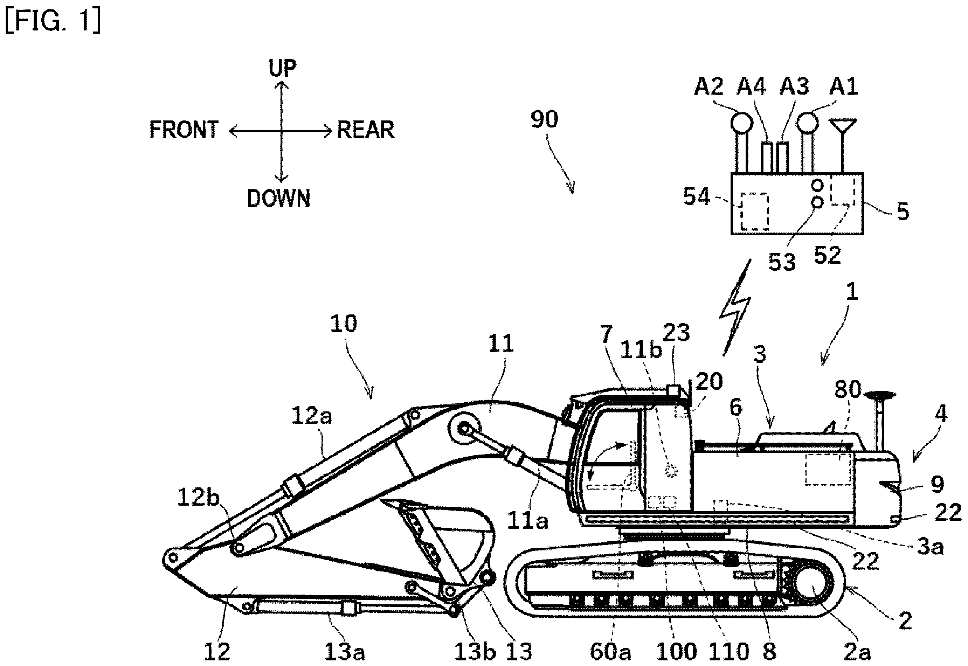

Fig. 1 is a diagram showing the hydraulic excavator 1 and the remote control system 90 of the hydraulic excavator 1. For convenience of explanation, the front, rear, and vertical directions of the hydraulic excavator 1 are defined as shown in Fig. 1. In other words, in this embodiment, unless otherwise specified, the front of the driver's seat (left direction in the figure) is considered the front of the hydraulic excavator 1.

The hydraulic excavator 1 includes a body (machine) 4 and a work device 10 attached to the body 4. The body 4 includes a travel body 2 and a swing body 3 rotatably mounted on the travel body 2. The work device 10 is attached to the front part of the swing body 3. The travel body 2 travels by driving a pair of left and right crawlers with the travel motor 2a. The swing body 3 is driven by the swing motor 3a and rotates relative to the travel body 2.

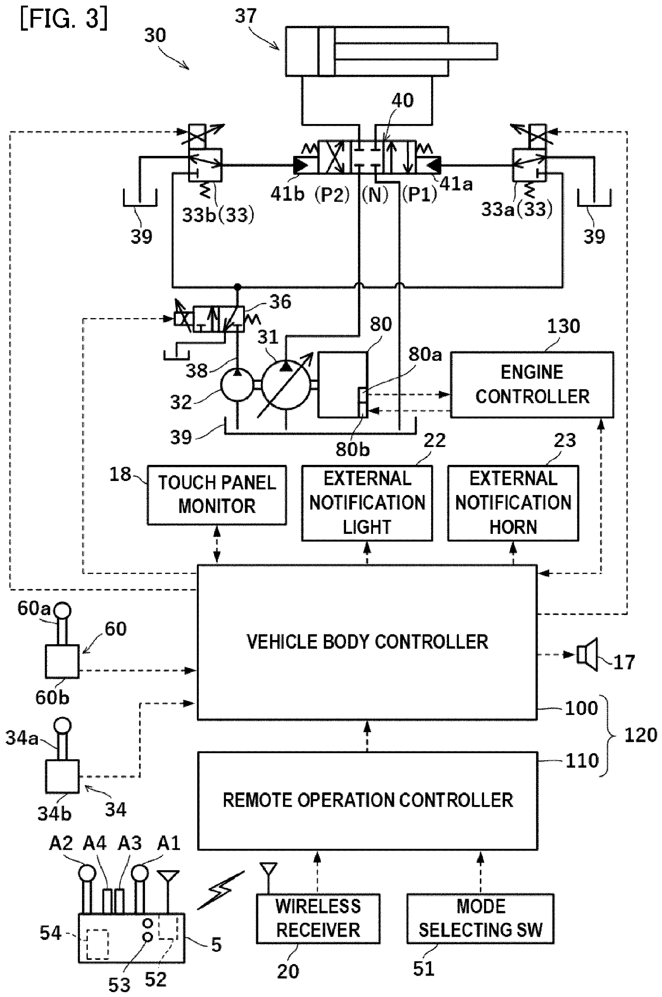

The swing body 3 includes a swing frame 8, an operating room (cab) 7 installed on the front left side of the swing frame 8, a counterweight 9 installed at the rear of the swing frame 8, and an engine room 6 installed at the rear side of the operating room 7 in the swing frame 8. The engine room 6 is equipped with hydraulic equipment such as the engine 80, which is the prime mover, and hydraulic pumps (main pump 31 and pilot pump 32 shown in Fig. 3) driven by the engine 80. The work device 10 is rotatably connected to the central front part of the swing frame 8.

The work device 10 is an articulated work device having multiple drive target members that are rotatably connected and multiple hydraulic cylinders that drive the drive target members. In this embodiment, the boom 11, arm 12, and bucket 13, which are three drive target members, are serially connected. The boom 11 is rotatably connected at its base end to the front part of the swing frame 8 by a boom pin 11b. The arm 12 is rotatably connected at its base end to the tip part of the boom 11 by an arm pin 12b. The bucket 13 is rotatably connected at the tip part of the arm 12 by a bucket pin 13b.

The boom 11 is driven by a hydraulic actuator, which is a hydraulic cylinder (hereinafter also referred to as boom cylinder 11a), and rotates relative to the swing frame 8. The arm 12 is driven by a hydraulic actuator, which is a hydraulic cylinder (hereinafter also referred to as arm cylinder 12a), and rotates relative to the boom 11. The bucket 13 is driven by a hydraulic actuator, which is a hydraulic cylinder (hereinafter also referred to as bucket cylinder 13a), and rotates relative to the arm 12.

The exterior of the operating room 7 is equipped with an external notification horn 23, which is an alarm device that alerts the outside of the hydraulic excavator 1. The external notification horn 23 is a sound output device that alerts workers around the hydraulic excavator 1 by outputting sound. The outer periphery of the swing body 3 is equipped with an external notification light 22, which is an alarm device that alerts the outside of the hydraulic excavator 1. The external notification light 22 is installed on the left side, right side, and rear side of the swing body 3. The external notification light 22 is a light-emitting device that alerts workers around the hydraulic excavator 1 by emitting light. The external notification light 22 is equipped with multiple light-emitting diodes (LEDs).

The remote control system 90 includes a remote control controller 110 mounted on the hydraulic excavator 1, a wireless control device 5 carried by the operator outside the hydraulic excavator 1 for remote operation, and a wireless receiver 20 that receives wireless control signals transmitted from the wireless control device 5.

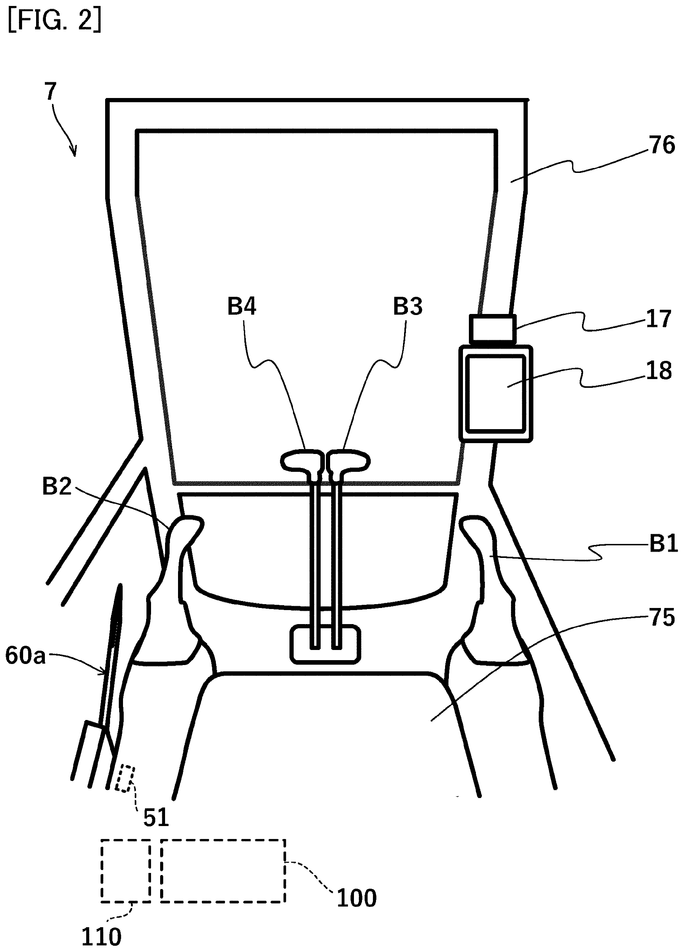

The wireless control device 5 is a remote control device capable of remotely operating the hydraulic excavator 1. The wireless control device 5 includes multiple remote control levers A1 to A4, multiple remote control switches, a wireless communication device 52 for wireless communication with the hydraulic excavator 1, and a terminal controller 54. The multiple remote control switches include an engine start switch 53 for starting the engine 80 of the hydraulic excavator 1 remotely, and a lock switch for executing or releasing hydraulic locks. The multiple remote control levers A1 to A4 have similar functions to the multiple indoor control levers B1 to B4 (see Fig. 2) that constitute the indoor operation device 34 installed inside the operating room 7 of the hydraulic excavator 1.

The terminal controller 54 functions as a terminal control device that controls the wireless communication device 52. The terminal controller 54 is composed of a microcomputer equipped with a CPU (Central Processing Unit) as an operation circuit, volatile memory called RAM (Random Access Memory) as a storage device, non-volatile memory such as EEPROM (Electrically Erasable and Programmable Read Only Memory) and flash memory as storage devices, an input/output interface (I/O interface) not shown in the figure, and other peripheral circuits.

The terminal controller 54 transmits wireless operation signals (remote operation signals) such as remote control levers A1 to A4 and engine start switch 53 to the hydraulic excavator 1 via the wireless communication device 52.

Figure 2 is a schematic view of the interior of the operating room 7 as seen from the rear side of the driver's seat 75 looking forward. As shown in Figure 2, the interior of the operating room 7 is equipped with a driver's seat 75 where the operator seated in the operating room 7 sits, indoor control levers B1 to B4 for operating various parts of the hydraulic excavator 1, a vehicle body controller 100 for controlling the operation of the hydraulic excavator 1, and a remote operation controller 110 that works in conjunction with the vehicle body controller 100 to control the operation of the hydraulic excavator 1 in response to wireless operation signals from the wireless operation device 5. The vehicle body controller 100 and the remote operation controller 110 are installed behind the driver's seat 75 in the operating room 7.

On the right side of the pillar 76 as viewed from the driver's seat 75, a speaker 17 and a touch panel monitor 18 are installed. The speaker 17 outputs guidance such as operation instructions and operational information of the hydraulic excavator 1 in voice based on control signals from the vehicle body controller 100. The touch panel monitor 18 has a display section for presenting various information to the operator and an input section for making various settings of the hydraulic excavator 1. The display section of the touch panel monitor 18 is, for example, a liquid crystal display, and it displays images representing various information such as operational information of the hydraulic excavator 1 on the display screen based on control signals from the vehicle body controller 100. The input section of the touch panel monitor 18 is a touch sensor that can be operated by fingers, a touch pen, etc., and it inputs predetermined information to the vehicle body controller 100 according to the operator's operation. Additionally, the speaker 17 and touch panel monitor 18 function as notification devices to output alert sounds and images to inform the operator in case of an abnormality in the hydraulic excavator 1.

On the right side of the driver's seat 75, an indoor control lever B1 for operating the bucket 13 and boom 11 is provided, and on the left side, an indoor control lever B2 for operating the swing body 3 and arm 12 is provided. A pair of indoor control levers B3 and B4 are provided at the front side of the driver's seat 75. The indoor control lever B4 is an control lever for the left crawler, and the indoor control lever B3 is an control lever for the right crawler.

On the left side (door side) of the indoor control lever B2 inside the operating room 7, a gate lock lever 60a is installed. The gate lock lever 60a can be manually switched between a lock position (raised position) that allows entry and exit of the operating room 7 and a lock release position (lowered position) that prohibits entry and exit (see Fig. 1).

Inside the operating room 7, a mode selecting switch 51 is installed. The mode selecting switch 51 is a mode selecting operation part that switches the operation mode to either the onboard operation mode or the remote control mode. The mode selecting switch 51 is located on the door side, near the feet of the operator when seated in the driver's seat 75. Therefore, the mode selecting switch 51 can be operated not only from inside the operating room 7 but also from outside.

The mode selecting switch 51 can be manually switched between the onboard operation position and the remote control position. The onboard operation position is the operation position for setting the operation mode to onboard operation mode. In the onboard operation mode, wired operation signals from the indoor operation device 34 for hydraulic actuators are enabled, and wireless operation signals from the wireless operation device 5 are disabled. In other words, in the onboard operation mode, the operation of the work device 10, swing body 3, and travel body 2 by the indoor operation device 34 is enabled, and the operation by the wireless operation device 5 is disabled. The remote control position is the operation position for setting the operation mode to remote control mode. In the remote control mode, wireless operation signals from the wireless operation device 5 for hydraulic actuators are enabled, and wired operation signals from the indoor operation device 34 are disabled. In other words, in the remote control mode, the operation of the work device 10, swing body 3, and travel body 2 by the wireless operation device 5 is enabled, and the operation by the indoor operation device 34 is disabled.

Hereinafter, the operation of switching the mode selecting switch 51 from the onboard operation position to the remote control position is referred to as the first mode selecting operation. In other words, the first mode selecting operation corresponds to the operation of switching from onboard operation mode to remote control mode using the mode selecting switch 51. Additionally, the operation of switching the mode selecting switch 51 from the remote control position to the onboard operation position is referred to as the second mode selecting operation. In other words, the second mode selecting operation corresponds to the operation of switching from remote control mode to onboard operation mode using the mode selecting switch 51.

Fig. 3 is a diagram showing the control system for controlling each part of the hydraulic excavator 1. Hereinafter, the travel motor (hydraulic motor) 2a, swing motor (hydraulic motor) 3a, boom cylinder (hydraulic cylinder) 11a, arm cylinder (hydraulic cylinder) 12a, and bucket cylinder (hydraulic cylinder) 13a mounted on the hydraulic excavator 1 are collectively referred to as hydraulic actuators. The hydraulic excavator 1 is equipped with multiple hydraulic actuators, but Fig. 3 illustrates a hydraulic cylinder 37 (e.g., boom cylinder 11a) for driving the target member of the work device 10 as a representative example. Additionally, the electric indoor operation device 34 for operating hydraulic actuators, the electromagnetic proportional valves 33a, 33b, and the flow control valve 40 driven according to the operation of the indoor operation device 34 are installed for each hydraulic actuator, but Fig. 3 illustrates only the configuration for controlling one hydraulic actuator as a representative example.

The hydraulic system 30 of the hydraulic excavator 1 includes a main pump 31, a pilot pump 32, a hydraulic cylinder 37 driven by hydraulic oil supplied from the main pump 31, a flow control valve (control valve) 40 that controls the flow (flow rate and direction) of hydraulic oil supplied from the main pump 31 to the hydraulic cylinder 37, and electromagnetic proportional valves 33a, 33b (33) that output command pilot pressure (pilot pressure) to drive the flow control valve 40.

The main pump 31 and pilot pump 32 are connected to the engine 80, and are driven by the engine 80 to discharge hydraulic oil (pressure oil). The main pump 31 is a variable displacement hydraulic pump, and the pilot pump 32 is a fixed displacement hydraulic pump. The engine 80 is the power source of the hydraulic excavator 1, and is constituted by an internal combustion engine such as a diesel engine.

The electromagnetic proportional valves 33a, 33b are that output command pilot pressure, generated using the pressure (discharge pressure) of hydraulic oil discharged from the pilot pump 32 as the base pressure, to the pressure receiving sections 41a, 41b of the flow control valve 40. The electromagnetic proportional valves 33a, 33b are controlled based on control signals (control current) from the vehicle body controller 100. The indoor operation device 34 installed inside the operating room 7 instructs the operation of the work device 10, swing body 3, and travel body 2 according to the operator's operation. The indoor operation device 34 includes a tiltable indoor control lever 34a and an operation sensor 34b that outputs signals (wired operation signals) corresponding to the operation amount (operation angle) of the indoor control lever 34a to the vehicle body controller 100.

The vehicle body controller 100 controls the electromagnetic proportional valves 33a, 33b based on wired operation signals from the indoor operation device 34. The indoor control lever 34a corresponds to the indoor control levers B1 to B4 (see Fig. 2) according to the hydraulic actuators. For example, if the hydraulic cylinder 37 shown in Fig. 3 is the boom cylinder 11a, the indoor control lever 34a is the indoor control lever B1 on the right side of the driver's seat.

When the command pilot pressure generated by the electromagnetic proportional valve 33a acts on the pressure receiving section 41a of the flow control valve 40 positioned at the neutral position (N), the flow control valve 40 is driven to one side and switched from the neutral position (N) to the first position (P1). As a result, the pressure oil discharged from the main pump 31 is guided to the bottom chamber of the hydraulic cylinder 37 (boom cylinder 11a), and hydraulic oil is discharged from the rod chamber to the tank 39, causing the hydraulic cylinder 37 (boom cylinder 11a) to extend. Consequently, the drive target member (boom 11) rotates in the first direction (upward).

When the command pilot pressure generated by the electromagnetic proportional valve 33b acts on the pressure receiving section 41b of the flow control valve 40 positioned at the neutral position (N), the flow control valve 40 is driven to the other side and switched from the neutral position (N) to the second position (P2). As a result, the pressure oil discharged from the main pump 31 is guided to the rod chamber of the hydraulic cylinder 37 (boom cylinder 11a), and hydraulic oil is discharged from the bottom chamber to the tank 39, causing the hydraulic cylinder 37 (boom cylinder 11a) to contract. Consequently, the drive target member (boom 11) rotates in the second direction (downward).

The hydraulic oil discharged from the main pump 31 is supplied to the hydraulic cylinder 37 through the flow control valve 40, driving the work device 10. Although not shown, the hydraulic oil discharged from the main pump 31 is supplied to the swing motor 3a and travel motor 2a through the flow control valve, driving the swing body 3 and travel body 2 respectively.

The gate lock lever device 60 includes a gate lock lever 60a and an operation position sensor 60b that detects the operation position of the gate lock lever 60a and outputs it to the vehicle body controller 100. A lock valve 36 is installed in the pilot line 38, which is the oil passage connecting the pilot pump 32 and the electromagnetic proportional valve 33. The lock valve 36 is an electromagnetic switching valve that switches between an open position, which opens the pilot line 38, and a closed position, which blocks the pilot line 38, according to the operating position of the gate lock lever 60a.

When the gate lock lever 60a is switched to the unlock position (lower position) and its operating position is detected by the operating position sensor 60b, the vehicle body controller 100 supplies power to the lock valve 36. As a result, the lock valve 36 is switched to the open position. Therefore, when the gate lock lever 60a is in the unlock position, the command pilot pressure corresponding to the operation amount of the indoor control lever 34a is generated by the electromagnetic proportional valve 33, and the hydraulic actuator corresponding to the operated indoor control lever 34a operates. In other words, when the gate lock lever 60a is operated to the unlock position (lower position), the hydraulic actuator can be operated by the indoor control device 34.

When the gate lock lever 60a is switched to the lock position (raised position) and its position is detected by the operation position sensor 60b, the vehicle body controller 100 cuts off or stops the power supply to the lock valve 36. As a result, the lock valve 36 is switched to the cut-off position. Therefore, the pilot source pressure to the electromagnetic proportional valve 33 is cut off, and the operation by the indoor control lever 34a is disabled. In other words, when the gate lock lever 60a is operated to the lock position (raised position), the operation of the hydraulic actuator by the indoor control device 34 becomes impossible.

The hydraulic excavator 1 includes a vehicle body controller 100, which is a control device that controls various devices such as a speaker 17, a touch panel monitor 18, an external notification light 22, an external notification horn 23, and an electromagnetic proportional valve 33, a wireless receiver 20 that communicates with a wireless operation device 5, and a remote control controller 110. The remote control controller 110 sends a mode switching signal to the vehicle body controller 100 to set it to the remote control mode while the mode switching switch 51 is operated to the remote control position. Additionally, the remote control controller 110 sends the wireless operation signal (remote control signal) from the wireless operation device 5, received by the wireless receiver 20, to the vehicle body controller 100.

The vehicle body controller 100 and the remote control controller 110 each consist of a computer equipped with processing devices such as a CPU (Central Processing Unit), MPU (Micro Processing Unit), DSP (Digital Signal Processor), non-volatile memory such as ROM (Read Only Memory), flash memory, hard disk drives, volatile memory known as RAM (Random Access Memory), input interfaces, output interfaces, and other peripheral circuits. These hardware components work together to operate software and realize multiple functions. The vehicle body controller 100 and the remote control controller 110 may each be configured with a single computer or multiple computers. Additionally, the functions of the vehicle body controller 100 and the remote control controller 110 may be realized with a single computer.

The non-volatile memory stores programs capable of executing various calculations. In other words, the non-volatile memory is a storage medium (storage device) that can read programs to realize the functions of this embodiment. Volatile memory is a storage medium (storage device) that temporarily stores calculation results from the processing device and signals input from the input interface. The processing device is a device that deploys programs stored in non-volatile memory to volatile memory for execution, performing predetermined processing on data acquired from the input interface, non-volatile memory, and volatile memory according to the program.

The input interface converts signals input from various devices into data that can be processed by the processing device. The output interface generates output signals based on the calculation results from the processing device and outputs these signals to various devices.

The vehicle body controller 100 and the remote control controller 110 constitute a controller 120 that controls the hydraulic actuator based on the wireless operation signal from the wireless operation device **5.**

When the mode switching switch 51 is operated to the onboard operation position, the vehicle body controller 100 sets the onboard operation mode, which is the normal mode. In the onboard operation mode, the vehicle body controller 100 controls the operation of the hydraulic actuator according to the operation of the indoor control device 34. In other words, when the operation mode is switched to the onboard operation mode by the mode switching switch 51, the vehicle body controller 100 controls the operation of the work device 10, the swing body 3, and the travel body 2 according to the operation of the indoor control device 34.

When the mode switching switch 51 is switched from the onboard operation position to the remote control position, power is supplied to the wireless receiver 20 and the remote control controller 110, and a mode switching signal is output from the remote control controller 110 to the vehicle body controller 100. The vehicle body controller 100 sets the remote control mode while the mode switching signal is being output from the remote control controller 110. In other words, the vehicle body controller 100 switches the operation mode to the remote control mode only while the mode switching signal is being input. In the remote control mode, when the wireless receiver 20 receives a wireless operation signal transmitted from the wireless operation device 5 via the antenna, the received operation signal is output from the remote control controller 110 to the vehicle body controller 100. The vehicle body controller 100 controls the operation of the hydraulic actuator according to the operation of the wireless operation device **5.** In other words, when the operation mode is switched to the remote control mode by the mode switching switch 51, the controller 120 controls the operation of the work device 10, the swing body 3, and the travel body 2 according to the operation of the wireless operation device **5.**

When the mode switching switch 51 is switched from the remote control position to the onboard operation position, the output of the mode switching signal from the remote control controller 110 to the vehicle body controller 100 stops. The vehicle body controller 100 switches the operation mode to the onboard operation mode when the mode switching signal is no longer input.

In the onboard operation mode, the vehicle body controller 100 calculates the target value of the command pilot pressure according to the operation amount of the indoor control device 34 based on the wired operation signal from the indoor control device 34. In the remote control mode, the vehicle body controller 100 calculates the target value of the command pilot pressure according to the operation amount of the wireless operation device 5 based on the wireless operation signal from the wireless operation device **5.** The vehicle body controller 100 controls the control current output to the electromagnetic proportional valve 33 based on the calculated target value of the command pilot pressure.

The hydraulic excavator 1 is equipped with an engine controller 130, which is a control device that controls the rotational speed of the engine 80. The engine controller 130 is connected to the vehicle body controller 100. The engine controller 130 controls the rotational speed of the engine 80 by adjusting the fuel injection amount to the cylinders of the engine 80 via the fuel injection device 80b. The engine 80 is equipped with a speed sensor 80a that detects the rotational speed of the engine 80. The engine controller 130 controls the fuel injection device 80b so that the actual rotational speed detected by the speed sensor 80a matches the target rotational speed of the engine 80 output by the vehicle body controller 100.

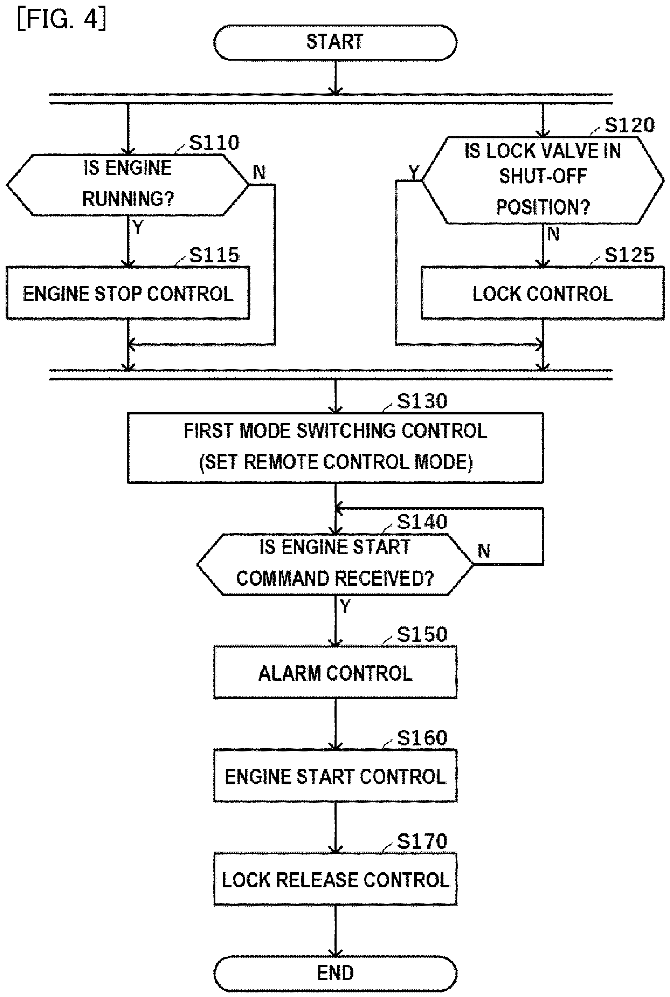

Referring to Figure 4, an example of the processing flow of the vehicle body controller 100 from the time the first mode selecting operation is performed until the hydraulic actuator can be operated by the wireless operation device 5 will be described. The processing in the flowchart shown in Figure 4 begins when the mode switching switch 51 is operated from the onboard operation position to the remote control position. The engine start command from the wireless operation device 5 and the wireless operation signal for operating the hydraulic actuator are input to the vehicle body controller 100 via the remote control controller 110.

As shown in Figure 4, when the mode switching switch 51 is operated from the onboard operation position to the remote control position, the processing of step S110 and step S120 is executed. In step S110, the vehicle body controller 100 determines whether the engine 80 is operating based on the rotational speed of the engine 80 detected by the speed sensor 80a. The vehicle body controller 100 determines that the engine 80 is stopped, i.e., the engine 80 is not operating, if the rotational speed of the engine 80 detected by the speed sensor 80a is below the speed threshold. The vehicle body controller 100 determines that the engine 80 is rotating, i.e., the engine 80 is operating, if the rotational speed of the engine 80 detected by the rotational speed sensor 80a is greater than the speed threshold. The speed threshold is a threshold for determining whether the engine 80 is stopped, and it is stored in the storage device in advance.

If it is determined in step S110 that the engine 80 is operating, the process proceeds to step S115. In step S115, the vehicle body controller 100 executes the stop control of the engine 80. Specifically, the vehicle body controller 100 outputs a stop signal to the engine controller 130. The engine controller 130, upon receiving the stop signal, terminates the fuel injection control by the fuel injection device 80b of the engine 80. The engine controller 130 outputs a stop completion signal to the vehicle body controller 100 when the rotational speed of the speed sensor 80a falls below the speed threshold, indicating that the engine 80 has stopped. The vehicle body controller 100 completes the stop control of the engine 80 upon receiving the stop completion signal from the engine controller 130.

The processes of steps S120 and S125 are executed in parallel with the processes of steps S110 and S115. Although not shown, the processes of steps S120 and S125 may be executed after the processes of steps S110 and S115.

In step S120, the vehicle body controller 100 determines whether the lock valve 36 is in the shut-off position based on the operation position of the gate lock lever 60a detected by the operation position sensor 60b. The vehicle body controller 100 determines that the lock valve 36 is in the cut-off position if the operation position detected by the operation position sensor 60b is the lock position. The vehicle body controller 100 determines that the lock valve 36 is in the open position if the operation position detected by the operation position sensor 60b is the unlock position.

If it is determined in step S120 that the lock valve 36 is in the open position, the process proceeds to step S125. In step S125, the vehicle body controller 100 executes lock control. Lock control is the control that switches the lock valve 36 from the open position to the cut-off position.

The first mode switching control of step S130 is executed when one of switching condition 1 and switching condition 2 is satisfied, and one of switching condition 3 and switching condition 4 is satisfied. Switching condition 1: It is determined in step S110 that the engine 80 is not operating. Switching condition 2: The stop control of the engine 80 is completed in step S115. Switching condition 3: It is determined in step S120 that the lock valve 36 is in the cut-off position. Switching condition 4: The lock control of step S125 is completed.

In step S130, the vehicle body controller 100 switches the operation mode from the onboard operation mode to the remote control mode and proceeds to step S140. Until the first mode switching control of step S130 is executed, the onboard operation mode is maintained. In the onboard operation mode, the wireless operation signal from the wireless operation device 5 is disabled. Therefore, even if a wireless operation signal is input to the vehicle body controller 100 while the processes of steps S110, S115, S120, and S125 are being executed, the hydraulic actuator will not operate. When the setting of the remote control mode is completed in step S130, the wired operation signal from the indoor operation device 34 is disabled, and the wireless operation signal from the wireless operation device 5 is enabled.

In step S140, the vehicle body controller 100 determines whether it has received an engine start command from the wireless operation device **5.** The vehicle body controller 100 repeatedly executes the process of step S140 at a predetermined control cycle until it receives the engine start command. When the vehicle body controller 100 receives the engine start command, it proceeds to step S150.

In step S150, the vehicle body controller 100 executes alarm control. Alarm control is the control that causes the external notification light 22 and the external notification horn 23 to notify in a predetermined notification manner. In other words, the external notification light 22 and the external notification horn 23 function as an alarm device to notify in advance that the engine 80 will be started.

In alarm control, the vehicle body controller 100 lights the external notification light 22 for a predetermined time TL. In alarm control, the vehicle body controller 100 causes the external notification horn 23 to output an intermittent sound for a predetermined time TS. The predetermined times TL and TS can be arbitrarily set. As an example, the predetermined times TL and TS are set to values of about 10 to 30 seconds. The predetermined times TL and TS may be set to the same value or different values.

The predetermined times TL and TS are set to ensure that the operator (such as an operator) who operated the mode selecting switch 51 can sufficiently move away from the hydraulic excavator 1 (hereinafter also referred to as evacuation time). The predetermined times TL and TS are predetermined based on the maximum working radius of the hydraulic excavator 1, the walking speed of the operator, and the margin. The larger the maximum working radius, the longer the predetermined times TL and TS become. When the alarm control is completed, the process proceeds to step S160.

In step S160, the vehicle body controller 100 executes the start control of the engine 80. Specifically, the vehicle body controller 100 starts the engine 80 by turning on the starter relay (not shown) and driving the starter motor (not shown). The vehicle body controller 100 also outputs a start signal to the engine controller 130. The engine controller 130, upon receiving the start signal, begins fuel injection control by the fuel injection device 80b of the engine 80. The engine controller 130 outputs a start completion signal to the vehicle body controller 100 when the rotational speed of the speed sensor 80a exceeds the speed threshold, indicating that the start of the engine 80 is complete. The vehicle body controller 100 completes the start control of the engine 80 by turning off the starter relay upon receiving the start completion signal from the engine controller 130. When the start control of the engine 80 is completed, the process proceeds to step S170.

In step S170, the vehicle body controller 100 executes unlock control. Unlock control is the control that switches the lock valve 36 from the shut-off position to the open position. When the unlock control is completed, the process shown in the flowchart of FIG. 4 is completed. In FIG. 4, an example is shown where unlock control is automatically executed when the engine start control is completed. However, the vehicle body controller 100 may execute unlock control when it receives an unlock signal from the wireless operation device **5.**

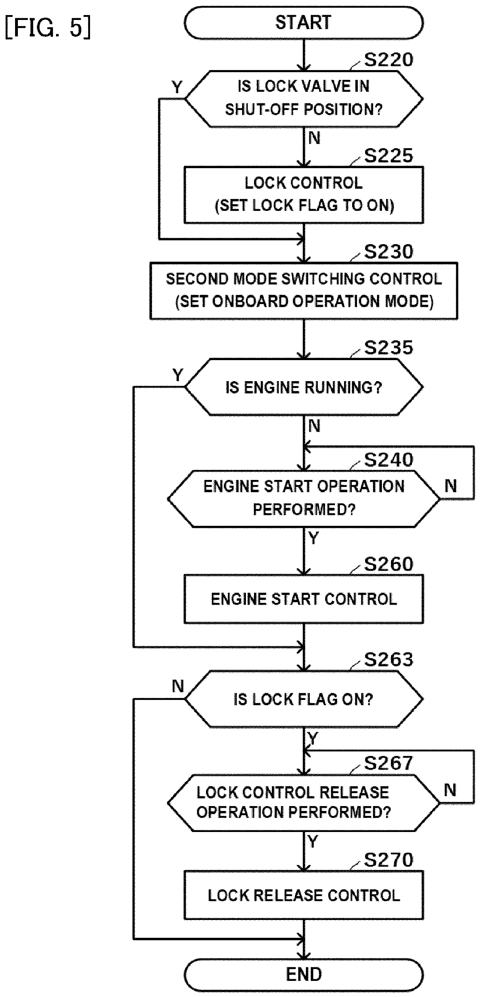

Referring to FIG. 5, an example of the process flow of the vehicle body controller 100 from the execution of the second mode selecting operation to the state where the hydraulic actuator can be operated by the indoor operation device 34 will be described. The process of the flowchart shown in FIG. 5 starts when the mode switching switch 51 is operated from the remote control position to the onboard operation position.

As shown in FIG. 5, in step S220, the vehicle body controller 100 executes the same lock state determination process as in step S120. If it is determined in step S220 that the lock valve 36 is in the open position, the process proceeds to step S225. If it is determined in step S220 that the lock valve 36 is in the cut-off position, the process proceeds to step S230.

In step S225, the vehicle body controller 100 executes the same lock control as in step S125. In other words, if the second mode selecting operation is performed, the vehicle body controller 100 blocks the pilot line 38 with the lock valve 36 even if the gate lock lever 60a has been switched to the unlock position. In step S225, the vehicle body controller 100 sets the lock flag to on and proceeds to step S230. The lock flag indicates that the gate lock lever 60a is in the unlock position (lowered position), but the vehicle body controller 100 is forcibly switching the lock valve 36 to the cut-off position.

In step S230, the vehicle body controller 100 switches the operation mode from the remote control mode to the onboard operation mode and proceeds to step S235. Until the second mode switching control of step S230 is executed, the remote control mode is maintained. In the remote control mode, the wired operation signal from the indoor operation device 34 is disabled. Therefore, even if a wired operation signal is input to the vehicle body controller 100 while the processes of steps S220 and S225 are being executed, the hydraulic actuator will not operate. When the setting of the onboard operation mode is completed in step S230, the wireless operation signal from the wireless operation device 5 is disabled, and the wired operation signal from the indoor operation device 34 is enabled.

In step S235, the vehicle body controller 100 executes the same engine operation determination process as in step S110. If it is determined in step S235 that the engine 80 is not operating, the process proceeds to step S240. In step S235, if it is determined that the engine 80 is running, the process proceeds to step S263.

In step S240, the vehicle body controller 100 determines whether the engine start operation has been performed using the ignition switch (engine key switch, etc.) installed inside the operating room 7. The vehicle body controller 100 repeatedly executes the process of step S240 at a predetermined control cycle until the engine start operation is performed. If the vehicle body controller 100 determines that the engine start operation has been performed, it advances the process to step S260.

In step S260, the vehicle body controller 100 executes the same start control of the engine 80 as in step S160. Once the start control of the engine 80 is completed, the process proceeds to step S263.

In step S263, the vehicle body controller 100 determines whether the lock flag is set to on. In step S263, if the lock flag is set to on, the process proceeds to step S267. In step S263, if the lock flag is set to off, the process shown in the flowchart of Figure 5 ends.

In step S267, the vehicle body controller 100 determines whether the lock control release operation has been performed based on the operation position of the gate lock lever 60a detected by the operation position sensor 60b. The lock control of step S225 is executed when the gate lock lever 60a is in the unlock position (lower position). The lock control release operation involves switching the gate lock lever 60a from the unlock position (lower position) to the lock position (upper position) and then back to the unlock position (lower position).

The vehicle body controller 100 repeatedly executes the process of step S267 at a predetermined control cycle until the lock control release operation is performed. If it is determined in step S267 that the lock control release operation has been performed, the process proceeds to step S270.

In step S270, the vehicle body controller 100 executes the same lock release control as in step S170. That is, the blocking of the pilot line 38 by the lock valve 36 of the forced lock control (step S225) is maintained until the lock control release operation is performed. When the lock release control of step S270 is completed, the process shown in the flowchart of FIG. 5 ends.

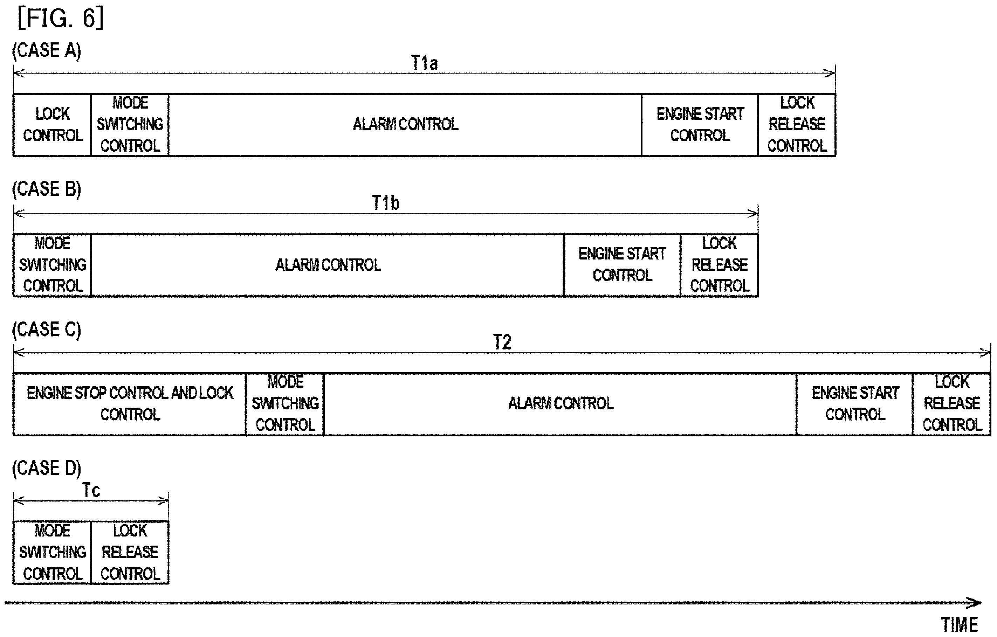

Referring to FIG. 6, the time required from when the first mode selecting operation is performed until it becomes a remotely operable state is described. Fig. 6 is a time chart showing the control content executed from the state where onboard operation is possible to the state where remote control is possible.

Cases A to C show the control flow in this embodiment, and Case D shows the control flow in a comparative example of this embodiment. The following describes the assumption that immediately after the first mode selecting operation, the engine start switch 53 is operated by the wireless operation device **5.**

Case A shows the case where the gate lock lever 60a is in the lock release position and the first mode selecting operation is performed while the engine 80 is not operating. Since the gate lock lever 60a is in the lock release position, lock control is executed (step S125). The time required for lock control is about 0.5 to 1 second. Then, mode switching control is executed (step S130). The time required for mode switching control is about 0.5 to 1 second.

If an engine start command is input while lock control or mode switching control is being executed, alarm control is executed immediately after mode switching control is completed (step S150). The time required for alarm control is about 10 to 30 seconds as mentioned above.

When alarm control is completed, engine start control is executed (step S160), and then lock release control is executed (step S170). The time required for engine start control is about 1 to 3 seconds, and the time required for lock release control is about 0.5 to 1 second. In Case A, after at least time T1a has elapsed since the first mode selecting operation, the work device 10, swing body 3, and travel body 2 can be operated by the wireless operation device **5.** Note that time T1a is about 12.5 to 36 seconds.

Case B shows the case where the gate lock lever 60a is in the lock position and the first mode selecting operation is performed while the engine 80 is not operating. In Case B, lock control is omitted, but other controls are the same as in Case A. In Case B, after at least time T1b has elapsed since the first mode selecting operation, the work device 10, swing body 3, and travel body 2 can be operated by the wireless operation device **5.** Note that time T1b is shorter than time Tla, about 12 to 35 seconds.

Thus, when the first mode selecting operation is performed while the engine 80 is not operating, after at least the first time T1 (= time T1b) has elapsed since the first mode selecting operation, the work device 10, swing body 3, and travel body 2 can be operated (i.e., remotely operable) by the wireless operation device **5.** The first time T1 can be said to be the minimum time from when the first mode selecting operation is performed while the engine 80 is not operating until it becomes a remotely operable state.

Case C shows the case where the gate lock lever 60a is in the lock release position and the first mode selecting operation is performed while the engine 80 is operating. Since the engine 80 is operating, engine stop control is executed (step S115). Since the gate lock lever 60a is in the lock release position, lock control is executed (step S125). The time required for engine stop control is about 3 to 10 seconds. Engine stop control and lock control are performed in parallel. Then, as in Cases A and B, mode switching control, alarm control, engine start control, and lock release control are executed in order.

In Case C, after at least the second time T2 has elapsed since the first mode selecting operation, the work device 10, swing body 3, and travel body 2 can be operated by the wireless operation device **5.** Note that the second time T2 is about 15 to 45 seconds. The second time T2 can be said to be the minimum time from when the first mode selecting operation is performed while the engine 80 is operating until it becomes a remotely operable state.

In Case C, if the gate lock lever 60a is in the lock position, lock control is omitted. However, lock control is completed before engine stop control is completed. Therefore, the time from the first mode selecting operation to the remotely operable state is the same whether the gate lock lever 60a is in the lock position or in the lock release position.

Thus, if the first mode selecting operation is performed while the engine 80 is running, the work device 10, swing body 3, and travel body 2 can be operated by the wireless operation device 5 (i.e., they become remotely operable) after the passage of a second time T2, which is at least longer than the first time T1, since the first mode selecting operation was performed.

Case D shows the case where the gate lock lever 60a is in the lock position and the first mode selecting operation is performed while the engine 80 is operating in a hydraulic excavator according to a comparative example. In the hydraulic excavator according to the comparative example, engine stop control is not executed when the first mode selecting operation is performed while the engine 80 is operating. Therefore, in Case D, when mode switching control and lock release control are completed, it becomes a remotely operable state. In Case D, after time Tc has elapsed since the first mode selecting operation, the work device 10, swing body 3, and travel body 2 can be operated by the wireless operation device **5.** Note that time Tc is shorter than time T1b, about 1 to 2 seconds.

Also, in Case D, if the gate lock lever 60a is in the lock release position, lock release control is omitted. Therefore, the time from the first mode selecting operation to the remotely operable state is about 0.5 to 1 second. Thus, in the comparative example, the time from the first mode selecting operation to the remotely operable state is shorter than in the present embodiment. Therefore, it is difficult to secure the retreat time for the worker who operated the mode switching switch 51. Therefore, the worker needs to communicate sufficiently with the operator operating the wireless operation device 5 before operating the mode selecting switch 51.

In contrast, in this embodiment, alarm control and engine start control are executed from the first mode selecting operation to the remotely operable state. Therefore, it is possible to easily secure the retreat time for the worker who operated the mode selecting switch 51.

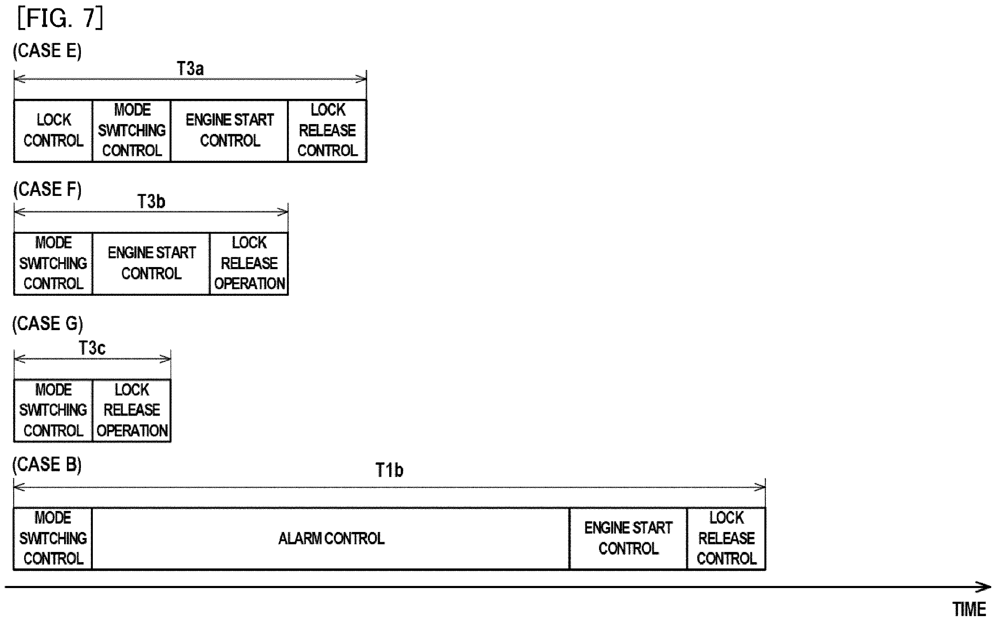

Referring to FIG. 7, the time required from when the second mode selecting operation is performed until it becomes an onboard operable state is described. FIG. 7 is a time chart showing the content of control executed from a remotely operable state to a boarding operable state. In FIG. 7, for comparison, the time chart of Case B described above is also shown. As shown, in any of Cases E to G, after the second mode selecting operation is performed, it can become an onboard operable state after a third time T3a, T3b, T3c shorter than the first time T1 (= T1b) required in Case B.

Case E shows the case where the gate lock lever 60a is in the lock release position and the second mode selecting operation is performed while the engine 80 is not operating. Since the gate lock lever 60a is in the lock release position, lock control is executed (step S225). Then, mode switching control is executed (step S230).

Then, when the engine start operation is performed, engine start control is executed (step S260). Then, when the lock control release operation is performed, lock release control is executed (step S270). In Case E, after the second mode selecting operation is performed and time T3b has elapsed, the work device 10, swing body 3, and travel body 2 can be operated (i.e., boarding operable state) by the indoor operation device 34. Note that time T3b can be about 4 to 8 seconds by quickly performing the engine 80 start operation and lock control release operation.

Case F shows the case where the gate lock lever 60a is in the lock position and the second mode selecting operation is performed while the engine 80 is not operating. In this Case F, after the mode switching control and engine start control are executed, as soon as the operator moves the gate lock lever 60a to the unlock position (lower position), the indoor operation device 34 allows the work device 10, swing body 3, and travel body 2 to be operable. In Case F, after the second mode selecting operation is performed and time T3b has elapsed, the indoor operation device 34 allows the work device 10, swing body 3, and travel body 2 to be operable (i.e., in a state where boarding operation is possible). In Case F, by promptly performing the engine 80 start operation and the switching operation of the gate lock lever 60a to the unlock position, time T3b can be made approximately the same as or shorter than time T3a.

Case G describes a situation where the gate lock lever 60a is in the locked position, and the second mode selecting operation is performed while the engine 80 is running. In this Case G, after the mode switching control is executed, as soon as the operator moves the gate lock lever 60a to the unlock position (lower position), the indoor operation device 34 allows the work device 10, swing body 3, and travel body 2 to be operable. In Case G, after the second mode selecting operation is performed and time T3c has elapsed, the indoor operation device 34 allows the work device 10, swing body 3, and travel body 2 to be operable (i.e., in a state where onboard operation is possible). In Case G, by promptly performing the switching operation of the gate lock lever 60a to the unlock position, time T3c can be made approximately the same as or shorter than time T3b.

According to the first embodiment, the following operational effects are achieved.

(1) The hydraulic excavator (work machine) 1 includes a working device 10, an engine (prime mover) 80 as a power source, a main pump (hydraulic pump) 31 driven by the engine 80, a hydraulic actuator that drives the working device 10 with hydraulic fluid supplied from the main pump 31, an indoor operation device 34 provided inside the operating room 7, a mode selecting switch (mode selecting operation part) 51 for switching operation modes, and a controller 120 for controlling the operation of the working device 10. The mode selecting switch 51 switches the operation mode to either the onboard operation mode, where the operation of the working device 10 by the indoor operation device 34 is enabled, or the remote control mode, where the operation of the working device 10 by the wireless operation device (remote control device) 5 is enabled. The controller 120 controls the operation of the working device 10 according to the operation of the indoor operation device 34 when the operation mode is switched to the onboard operation mode by the mode selecting switch 51. The controller 120 controls the operation of the working device 10 according to the operation of the wireless operation device 5 when the operation mode is switched to the remote control mode by the mode selecting switch 51.

The controller 120 is composed of a vehicle body controller 100 and a remote control controller 110. The vehicle body controller 100 and the remote control controller 110 work together to control the hydraulic actuator of the working device 10 in response to the wireless operation signal from the wireless operation device **5.** The controller 120 allows the working device 10 to be operable by the wireless operation device 5 at least after the first time T1 (T1a, T1b) has elapsed since the first mode selecting operation was performed, if the first mode selecting operation was performed while the engine 80 was not operating (see Fig. 6). Additionally, the controller 120 allows the working device 10 to be operable by the wireless operation device 5 after at least the second time T2, which is longer than the first time T1, has elapsed since the first mode selecting operation was performed, if the first mode selecting operation was performed while the engine 80 was operating (see Fig. 6).

In other words, in this embodiment, when the first mode selecting operation is performed to switch from the onboard operation mode to the remote control mode by the mode selecting switch 51, the time until the controller 120 enables the operation of the working device 10 by the wireless operation device 5 is longer for the second time T2, which is when the first mode selecting operation is performed while the engine 80 is operating, than the first time T1, which is when the first mode selecting operation is performed while the engine 80 is not operating.

This ensures that sufficient retreat time can be secured even if the mode selecting switch 51 is operated while the engine 80 is operating. In other words, retreat time is secured regardless of the operating state of the engine 80. Therefore, according to this embodiment, it is possible to prevent the hydraulic excavator 1 from starting to move by remote control before the operator who operated the mode selecting switch 51 has sufficiently moved away from the hydraulic excavator 1. As a result, even if the wireless operation device 5 is misoperated immediately after the first mode selecting operation, contact between the hydraulic excavator 1 and the operator can be avoided.

(2) The controller 120 switches from the onboard operation mode to the remote control mode after stopping the operation of the engine 80 if the first mode selecting operation is performed while the engine 80 is operating (see Fig. 4, Fig. 6, case C). The controller 120 immediately switches from the onboard operation mode to the remote control mode if the first mode selecting operation is performed while the engine 80 is not operating (see Fig. 6, cases A, B). In other words, when the first mode seleting operation is performed while the engine 80 is operating, the time from the first mode selecting operation to the setting of the remote control mode is longer than the time from the first mode selecting operation to the setting of the remote control mode when the first mode selecting operation is performed while the engine 80 is not operating (see Fig. 6).

In this configuration, the start control of the engine 80 is always executed after the first mode selecting operation is performed. Before the start control of the engine 80 prior to remote operation, the start of the engine 80 is usually notified around the vehicle body **4.** The controller 120 according to this embodiment starts the engine 80 after performing an alarm for a predetermined time with the alarm device (external notification light 22, external notification horn 23) when it receives an engine start command (prime mover start command) transmitted from the wireless operation device 5 after stopping the operation of the engine 80. The predetermined time for which the alarm is performed by the alarm device can be arbitrarily set. Therefore, the retreat time can be appropriately set in consideration of the maximum working radius of the hydraulic excavator 1.

(3) The controller 120 switches from the onboard operation mode to the remote control mode after blocking the pilot line (oil passage) 38 with the lock valve 36 if the first mode selecting operation is performed while the engine 80 is operating (see Fig. 4, Fig. 6, case C). In this configuration, the first mode selecting control is executed after the pilot line 38 is blocked by the lock valve 36 even if the gate lock lever 60a is in the unlocked position. Therefore, it is possible to prevent the hydraulic excavator 1 from operating until the wireless operation signal from the wireless operation device 5 becomes enabled. In a hydraulic excavator 1 that can be operated both onboard and remotely, there may be cases where operator A remains onboard for guidance purposes while operator B, the instructor, performs remote operation. In this embodiment, when operator B performs the first mode selecting operation and then performs remote operation after moving away from the hydraulic excavator 1, it is possible to prevent the hydraulic excavator 1 from operating due to a misoperation of operator A's indoor operation device 34 during operator B's retreat.

(4) When the second mode selecting operation is performed to switch from the remote control mode to the onboard operation mode by the mode selecting switch 51, the third time T3 (T3a, T3b, T3c) until the controller 120 enables the operation of the working device 10 by the indoor operation device 34 is shorter than the first time T1 (T1a, T1b). The hydraulic excavator 1 can be operable by the indoor operation device 34 after the third time T3 (T3a, T3b, T3c), which is shorter than the first time T1 (T1a, T1b), has elapsed since the second mode selecting operation was performed, if the second mode selecting operation is performed (see Fig. 7). Therefore, if the second mode selecting operation is performed, onboard operation can be performed promptly.

(5) The controller 120 switches from the remote control mode to the onboard operation mode after blocking the pilot line 38 with the lock valve 36 if the second mode selecting operation is performed (see Fig. **5****,** steps S225, S230). The gate lock lever 60a may naturally drop and switch to the unlocked position due to vibrations caused by the operation of the hydraulic excavator 1 by remote control. Therefore, in a configuration where lock control is not executed when the second mode selecting operation is performed in this state, the hydraulic excavator 1 may operate if a part of the operator's body touches the indoor operation device 34 when the operator boards the operating room 7 after performing the second mode selecting operation. In contrast, the controller 120 according to this embodiment switches from the remote control mode to the onboard operation mode after blocking the pilot line 38 with the lock valve 36, even if the gate lock lever (lock lever) 60a has been switched to the unlocked position, when the second mode selecting operation is performed. Therefore, as described above, it is possible to prevent the hydraulic excavator 1 from operating due to a misoperation of the indoor operation device 34 during boarding.

(6) Additionally, the controller 120 maintains the blocked state of the pilot line 38 by the lock valve 36 until the gate lock lever 60a is switched from the unlocked position to the locked position and then switched back to the unlocked position, after blocking the pilot line 38 with the lock valve 36, when the second mode selecting operation is performed while the gate lock lever 60a is switched to the unlocked position (see Fig. **5****,** steps S267, S270). In this configuration, the intention to start the operator's onboard operation can be confirmed by the operation of the gate lock lever 60a, allowing the onboard operation to be enabled.

### <Modification Example 1 of the First Embodiment>

In the first embodiment, an example where the prime mover (power source) driving the main pump 31 is the engine 80 was described. However, the prime mover (power source) driving the main pump 31 may be an electric motor. In this configuration, the state where the relay of the power line connecting the inverter, which controls the rotational speed of the electric motor, and the power supply device such as a battery is turned on corresponds to the state where the prime mover is operating (in operation). In other words, the state where the electric motor is rotating and the state where it can immediately rotate even if the rotation is stopped correspond to the state where the prime mover is operating. Additionally, the state where the relay is turned off corresponds to the state where the prime mover is not operating (non-operational). In other words, the state where the electric motor's rotation is stopped and cannot immediately rotate corresponds to the state where the prime mover is not operating.

### <Modification Example 2 of the First Embodiment>

In the first embodiment, an example was described where, if the first mode selecting operation is performed while the engine 80 is operating, the mode switching control is executed after the operation of the engine 80 is stopped. However, the present invention is not limited thereto. For example, if the first mode selecting operation is performed while the engine 80 is operating, the mode switching control may be executed after a predetermined time (about 10 to 30 seconds) has elapsed while keeping the engine 80 running. In other words, the controller 120 starts measuring time when the first mode selecting operation is performed while the engine 80 is operating, and executes the first mode switching control when the measured time exceeds the predetermined time. In this modification example, it is preferable to issue an alarm indicating the switch from onboard operation mode to remote control mode before executing the first mode switching control.

### <Modification Example 3 of the First Embodiment>

In the first embodiment, when the first mode selecting operation is performed while the engine 80 is operating, the first mode switching control is executed after the engine stop control is performed and before receiving the engine start command, and an example where the wireless operation signal is enabled was described. However, the first mode switching control may be executed between the alarm control (S150) and the engine start control (S160) shown in Fig. 4, between the engine start control (S160) and the unlock control (S170), or after the unlock control (S170). It is preferable that the controller 120 executes the first mode switching control such that the time from when the first mode selecting operation is performed until the first mode switching control is executed is longer when the first mode selecting operation is performed while the engine 80 is operating compared to when it is performed while the engine 80 is not operating. Furthermore, it is preferable that the controller 120 executes the first mode switching control such that the time from the first mode selecting operation during the operation of the engine 80 until the first mode switching control is executed is longer than the time from the second mode selecting operation until the second mode switching control is executed. The longer the time from switching the mode selecting switch 51 to the remote operation position until the wireless operation signal (remote operation signal) from the wireless operation device 5 is enabled, the longer the retreat time that can be secured.

### <Modification Example 4 of the First Embodiment>

In the first embodiment, an example was described where the external notification light 22 and the external notification horn 23 function as an alarm device to notify that the engine 80 is starting. However, it is also possible to notify the workers around the hydraulic excavator 1 that the engine 80 is starting by, for example, flashing the work lights that illuminate the work site.

### <Modification Example 5 of the First Embodiment>

In the first embodiment, an example was described where the mode selecting switch 51 is installed inside the operating room 7. However, the mode selecting switch 51 may be installed outside the operating room 7. For example, the mode selecting switch 51 may be installed on the side or underside of the swing body 3, in a location that is easily accessible from the ground.

### <Second Embodiment>

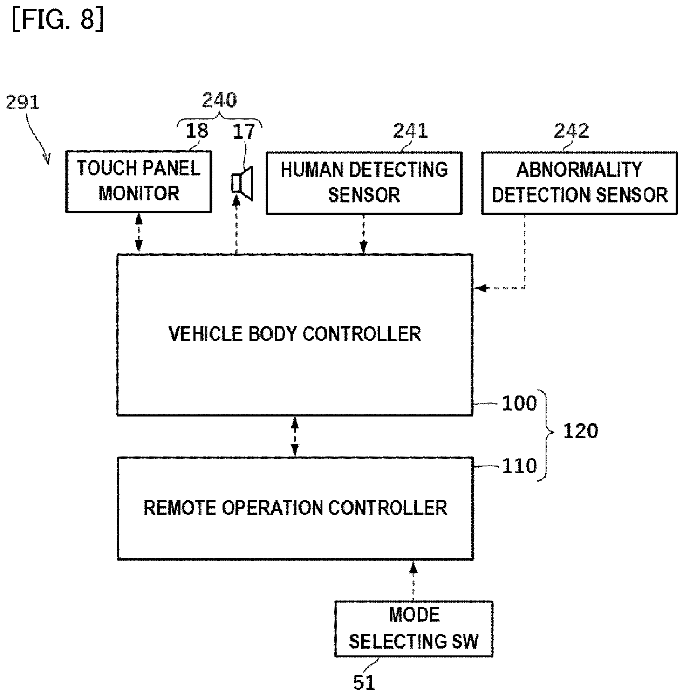

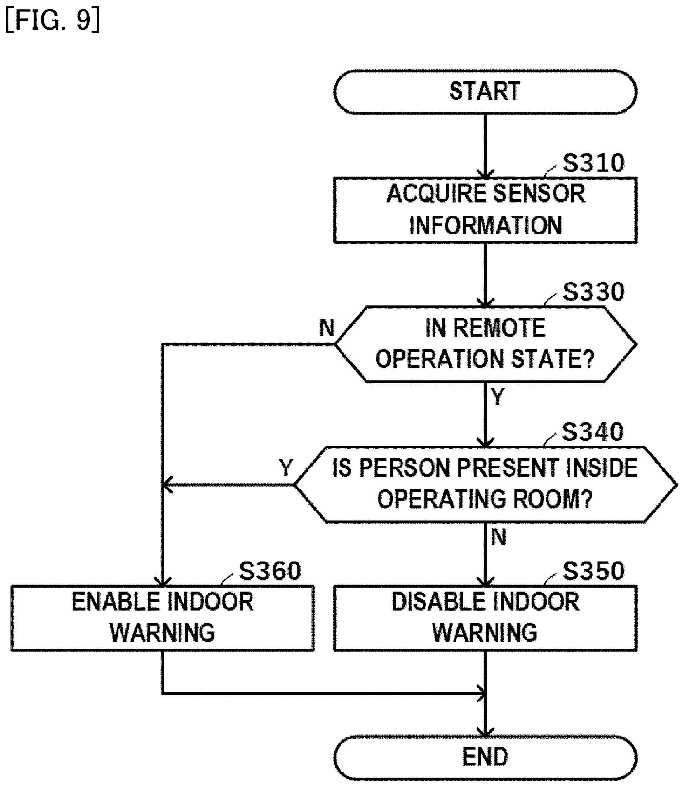

Referring to Figures 8 and 9, the hydraulic excavator according to the second embodiment of the present invention will be described. The same reference numerals are used for the same or equivalent configurations as those described in the first embodiment, and the differences will be mainly explained.

Figure 8 is a diagram showing the configuration of the notification system 291 mounted on the hydraulic excavator according to the second embodiment. As shown in Figure 8, the notification system 291 includes a human detecting sensor 241, an abnormality detection sensor 242, a notification device 240 composed of a speaker 17 and a touch panel monitor 18, a controller 120, and a mode selecting switch 51.

The human detecting sensor 241 is a sensor that detects whether an operator is onboard inside the operating room **7.** The human detecting sensor 241 outputs a human detection signal to the vehicle body controller 100 when it detects a person inside the operating room **7.** The human detecting sensor 241 does not output a human detection signal when it does not detect a person inside the operating room **7.** The human detecting sensor 241 is, for example, an infrared sensor that detects a person based on the amount of infrared radiation emitted by the operator present inside the operating room **7.** The human detecting sensor 241 can employ various sensors, not limited to infrared sensors. For example, the human detecting sensor 241 may be a load (pressure) sensor that detects a person based on the load (pressure) of the operator seated in the driver's seat **75.** Additionally, the human detecting sensor 241 may be an image sensor that captures the interior of the operating room 7 and detects a person based on the captured images.

The abnormality detection sensor 242 is a sensor that detects abnormalities in the hydraulic excavator **1.** The abnormality detection sensor 242 is, for example, a seat belt switch that detects whether the operator operating the hydraulic excavator 1 is wearing the seat belt that restrains the operator. The seat belt switch is a switch attached to the buckle of the seat belt device that restrains the operator. When the tongue plate (mounting bracket) of the seat belt is inserted into the buckle, the seat belt switch outputs a fastening signal to the vehicle body controller 100. When the tongue plate of the seat belt is removed from the buckle, the seat belt switch does not output an fastening signal to the vehicle body controller 100.

The vehicle body controller 100 acquires sensor information from the abnormality detection sensor 242 when the ignition switch (not shown) is turned on. The vehicle body controller 100 determines whether an abnormality of the seat belt being unfastened has occurred based on the sensor information from the abnormality detection sensor 242. The vehicle body controller 100 executes a belt unfastened warning as a warning (hereinafter also referred to as an indoor warning) to the person inside the operating room 7 when an abnormality of the seat belt being unfastened has occurred. Specifically, the vehicle body controller 100 performs a belt unfastened warning by the notification device 240 to prompt the operator to fasten the seat belt when the warning conditions for the seat belt are met. The vehicle body controller 100, for example, outputs a warning sound through the speaker 17 or displays a warning message image prompting the fastening of the seat belt on the display screen of the touch panel monitor 18.

The warning conditions for the seat belt include the following individual conditions 1 to 3. The vehicle body controller 100 determines that the warning conditions are met when all of the following individual conditions 1 to 3 are satisfied and performs a belt unfastened warning by the notification device 240. The vehicle body controller 100 determines that the warning conditions are not met if any one of the following individual conditions 1 to 3 is not satisfied. In this case, the belt unfastened warning is not performed. Individual condition 1: The engine 80 is started. Individual condition 2: The state where the fastening signal is not input from the abnormality detection sensor 242 has continued for a predetermined time. Individual condition 3: The warning disable flag is set to off.

Referring to Figure 9, an example of the flow of the warning disable flag setting process executed by the vehicle body controller 100 will be described. The process shown in the flowchart of Figure 9 is started by turning on the ignition switch and is repeatedly executed at a predetermined control cycle. The process shown in the flowchart of Figure 9 may be executed only once when the ignition switch is turned on and thereafter executed each time the operation position of the mode selecting switch 51 is switched.

As shown in Figure 9, in step S310, the vehicle body controller 100 acquires sensor information from the human detecting sensor 241 and the abnormality detection sensor 242 and proceeds to step S330.

In the next step S330, the vehicle body controller 100 determines whether it is in a remote operation state based on the operation position of the mode selecting switch 51. The vehicle body controller 100 determines that it is in a remote operation state when the mode selecting switch 51 is in the remote operation position and proceeds to step S340. The vehicle body controller 100 determines that it is in a boarding operation state when the mode selecting switch 51 is in the boarding operation position and proceeds to step S360.

In step S340, the vehicle body controller 100 determines whether a person is present inside the operating room 7 based on the detection result of the abnormality detection sensor 242. The vehicle body controller 100 determines that there is no person inside the operating room 7 if it has not acquired a human detection signal in step S310. As a result, the process proceeds from step S340 to step S350. The vehicle body controller 100 determines that a person is present inside the operating room 7 if it has acquired a human detection signal in step S310. As a result, the process proceeds from step S340 to step S360.

In step S350, the vehicle body controller 100 decides to disable the indoor warning. Specifically, it sets the warning disable flag to on. In step S360, the vehicle body controller 100 decides to enable the indoor warning. Specifically, it sets the warning disable flag to off. When the warning disable flag setting process in step S350 or step S360 is completed, the process shown in the flowchart of Figure 9 for this control cycle is terminated.

Thus, when in an onboard operation state or when a person is present inside the operating room 7, the warning disable flag is set to off. Therefore, when the above individual conditions 1 and 2 are met, a belt unfastened warning is performed by the notification device 240. On the other hand, when in a remote operation state and no person is present inside the operating room 7, the warning disable flag is set to on. When the warning disable flag is set to on, a belt unfastened warning by the notification device 240 is not performed even if the above individual conditions 1 and 2 are satisfied.

According to the second embodiment, in addition to the same effects as the first embodiment, the following effects are achieved.

The hydraulic excavator 1 is equipped with an abnormality detection sensor 242 that detects abnormalities, a notification device 240 that executes an indoor warning to the interior of the operating room 7 when an abnormality is detected by the abnormality detection sensor 242, and a controller 120 that controls the notification device 240. The controller 120 determines whether it is in a remote operation state. Additionally, the controller 120 determines whether there is a person inside the operating room 7. The controller 120 disables the indoor warning by the notification device 240 if it is in a remote operation state and there is no person inside the operating room 7. The controller 120 enables the indoor warning by the notification device 240 if it is not in a remote operation state or if there is a person inside the operating room 7. The controller 120 executes the indoor warning by the notification device 240 if predetermined conditions (individual condition 1 and individual condition 2) are met and the indoor warning is enabled. The controller 120 does not execute the indoor warning by the notification device 240 if the indoor warning is disabled, even if the predetermined conditions (individual condition 1 and individual condition 2) are met.

Assuming that the state is remote operation and there is no person inside the operating room 7, if the indoor warning is enabled, the indoor warning will be executed even when the hydraulic excavator 1 is operated unmanned, which is troublesome. Furthermore, if the indoor warning continues to operate, workers around the hydraulic excavator 1 might mistakenly think that the excavator is malfunctioning. In this case, workers would have to interrupt their work to check for malfunctions in the hydraulic excavator 1, leading to decreased work efficiency at the site.

In contrast, this embodiment can provide a hydraulic excavator 1 where the indoor warning is disabled when in a remote operation state and no person is inside the operating room 7. As a result, it is possible to prevent situations that would cause the interruption of workers' tasks. Note that if there is a person inside the operating room 7, the indoor warning will be executed even in a remote operation state. Therefore, according to this embodiment, when remote operation is performed with a person onboard in the operating room 7, it is possible to appropriately prompt the person onboard to wear a seatbelt.

### <Modification Example 1 of the Second Embodiment>

The controller 120 may store the disabled indoor warnings as historical data associated with the date and time in non-volatile memory (such as a hard disk drive). This allows for later verification of the history of disabled indoor warnings.

### <Modification Example 2 of the Second Embodiment>

The controller 120 may disable the indoor warning solely based on the remote operation state. That is, the process of step S340 in FIG. 9 may be omitted. By including at least the condition of being in a "remote operation state" to disable the indoor warning, it is possible to prevent the execution of indoor warnings during remote operation. Note that in this modification example, the indoor warning is disabled even if there is a person inside the operating room 7, but as explained in the first embodiment, when the mode selecting switch 51 is switched from the onboard operation position to the remote operation position, an alarm control to notify the start of the engine 80 is executed. Therefore, the person inside the operating room 7 can make appropriate preparations, such as fastening the seatbelt, before remote operation is performed.

### <Modification Example 3 of the Second Embodiment>

In the second embodiment, an example was described where the output of the warning sound by the speaker 17 and the output of the warning image by the touch panel monitor 18 are disabled when the warning disable flag is set to on. However, the present invention is not limited to this. The controller 120 may disable only the output of warning sounds from the speaker 17 or only the output of warning images from the touch panel monitor 18 when the warning disable flag is set to on.

### <Modification Example 4 of the Second Embodiment>

The notification mode of the indoor warning is not limited to the examples described above. For example, instead of displaying a warning image on the touch panel monitor 18, an indoor warning may be performed by flashing a warning light such as an **LED.**

### <Modification Example 5 of the Second Embodiment>

The abnormality detection sensor 242 is not limited to being a sensor for detecting the presence or absence of seatbelt fastening. In other words, the indoor warning is not limited to a seatbelt unfastened warning. For example, the abnormality detection sensor 242 may be a sensor for detecting an air conditioner abnormality. In this case, the controller 120 notifies the indoor warning through the notification device 240 when it receives a signal indicating an air conditioner abnormality detected by the abnormality detection sensor 242. Additionally, the abnormality detection sensor 242 may be a sensor for detecting a person present within the working range of the hydraulic excavator 1. In this case, the controller 120 notifies the indoor warning through the notification device 240 when it receives a signal indicating the presence of a person within the working range from the abnormality detection sensor 242. According to this modification example, by disabling the indoor warning when an air conditioner abnormality and an abnormality around the vehicle body 4 (intrusion of a person into the working range) occur during the remote operation state, the same effects as the second embodiment can be obtained.

### <Modification Example 6 of the Second Embodiment>

In the second embodiment, an example was described where the controller 120 determines whether it is in a remote operation state or an onboard operation state based on the operation position of the mode selecting switch **51.** However, the method for determining the operation state is not limited to this. The controller 120 may determine the remote operation state when the operation mode is the remote control mode and determine the onboard operation state when the operation mode is the onboard operation mode.

### <Modification Example 7 of the Second Embodiment>

The hydraulic excavator 1 may be equipped with a mode selection operation unit that allows manual selection between a normal mode, which executes an indoor warning when both individual condition 1 and individual condition 2 are met regardless of the indoor warning flag, and a warning disable mode, which executes an indoor warning when all of individual conditions 1 to 3 are met considering the indoor warning flag.

### <Modification Example 8 of the Second Embodiment>

The warning conditions for the seatbelt are not limited to the examples described above. For example, instead of the individual condition 1 mentioned above, the ignition power-on state may be adopted as an individual condition.

### <Third Embodiment>

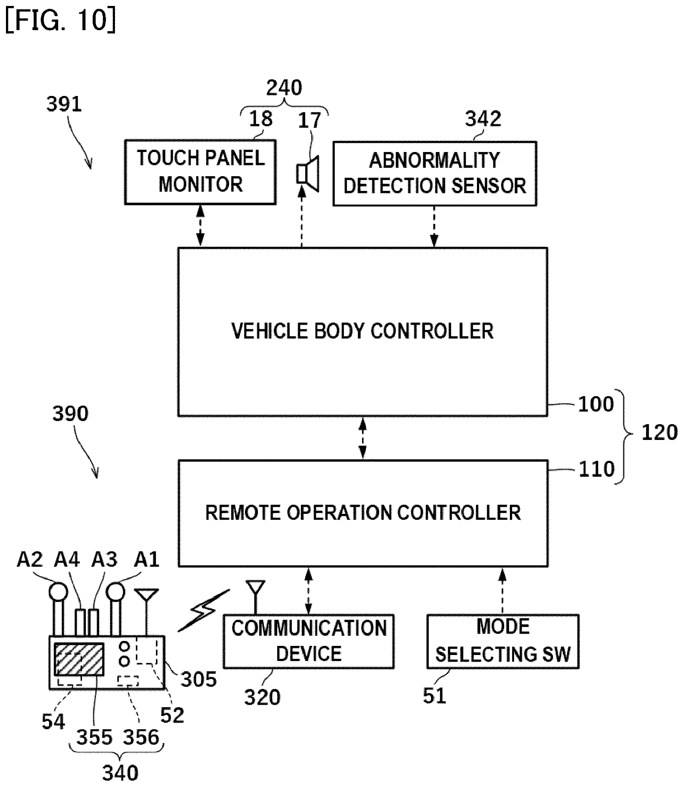

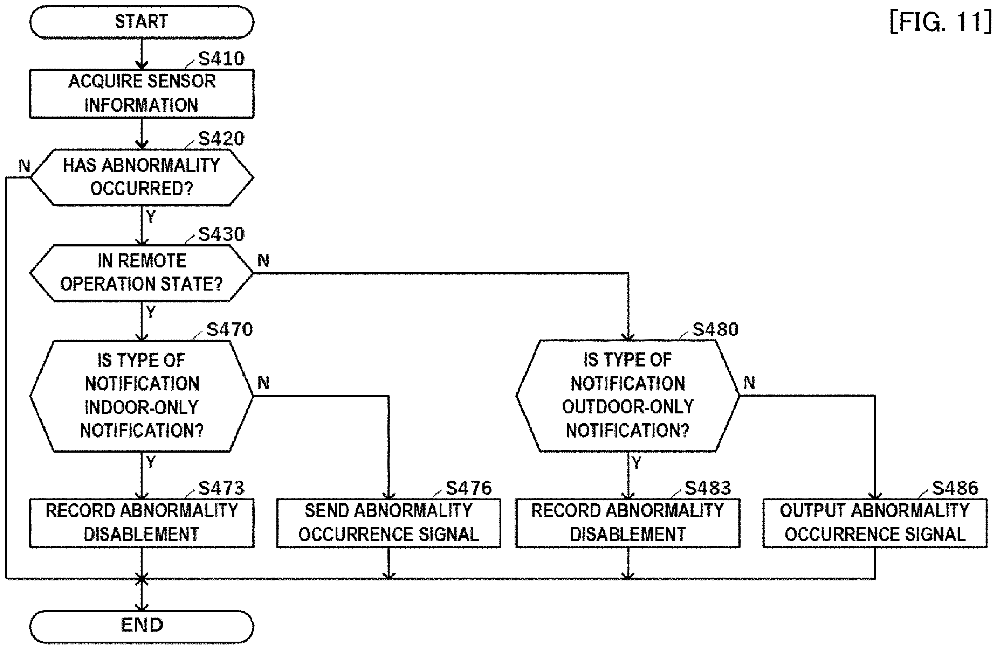

Referring to FIGS. 10 and 11, the hydraulic excavator according to the third embodiment of the present invention will be described. Note that the same reference numerals are used for the same or equivalent configurations as those described in the first and second embodiments, and the differences will be mainly described. In the second embodiment, an example was described where it is determined whether to disable the indoor warning based on whether it is in a remote operation state. In contrast, the third embodiment predetermines indoor-only notification, outdoor-only notification, and common indoor-outdoor notification, and determines whether to notify the abnormality based on the content of the abnormality and whether it is in a remote operation state. Details will be explained below.

FIG. 10 is a diagram showing the configuration of the remote operation system 390 and the notification system 391 according to the third embodiment. As shown in FIG. 10, the remote operation system 390 includes a remote control controller 110 mounted on the hydraulic excavator 1, a wireless operation device 305 carried by an operator who performs remote operation of the hydraulic excavator 1 from outside, and a communication device 320 that receives wireless operation signals transmitted from the wireless operation device 305.

The communication device 320 has the same functions as the wireless receiver 20 described in the first embodiment. Additionally, the communication device 320 functions as a wireless transmitter that sends operation information of the hydraulic excavator 1 to the wireless operation device 305. The wireless operation device 305 has the same functions as the wireless operation device 5 described in the first embodiment.

The notification system 391 according to the third embodiment includes an abnormality detection sensor 342, a notification device 240 inside the operating room 7, a terminal notification device 340 of the wireless operation device 305, a communication device 320, a controller 120, and a mode selecting switch 51. The terminal monitor 355 is a display device such as a liquid crystal display, and the terminal speaker 356 is a sound output device that outputs sound. The terminal notification device 340 is controlled by the terminal controller 54 and notifies the operator remotely controlling the hydraulic excavator 1 of any abnormalities occurring in the hydraulic excavator 1.

The controller 120 executes notification to the operator on board in the operating room 7 through the notification device 240 inside the operating room 7 when an abnormality is detected by the abnormality detection sensor 342. Additionally, when an abnormality is detected by the abnormality detection sensor 342, the controller 120 sends an abnormality occurrence signal, indicating that an abnormality has occurred, to the wireless operation device 305 via the communication device 320.

The terminal controller 54 of the wireless operation device 305, upon acquiring an abnormal occurrence signal, displays an image indicating the occurrence of an abnormality on the terminal monitor 355. Additionally, the terminal controller 54, upon acquiring an abnormality occurrence signal, outputs a sound indicating the occurrence of an abnormality through the terminal speaker 356.

The non-volatile memory of the controller 120 stores a notification table. The notification table is a data table that associates the content of abnormalities with the type of notification. The types of notification include indoor-only notification, outdoor-only notification, and common indoor-outdoor notification.

In this embodiment, the seatbelt unfastened abnormality is registered in association with indoor-only notification. Additionally, air conditioner abnormalities are registered in association with indoor-only notification. Communication abnormalities between the hydraulic excavator 1 and the wireless operation device 305 are registered in association with outdoor-only notification. Note that communication abnormalities include abnormalities in the communication device 320 of the hydraulic excavator **1.** Abnormalities where a person is present within the working range of the hydraulic excavator 1 are registered in association with common indoor-outdoor notification.

Multiple abnormality detection sensors 342 are provided. The multiple abnormality detection sensors 342 include the seatbelt switch described in the second embodiment, the sensor for detecting air conditioner abnormalities described in modification example 5 of the second embodiment, and the sensor for detecting a person present within the working range. Additionally, the multiple abnormality detection sensors 342 include a sensor for detecting abnormalities in the communication device 320.

FIG. 11 is a flowchart showing an example of the processing flow executed by the controller 120 according to the third embodiment. The processing shown in the flowchart of FIG. 11 starts when the ignition switch is turned on and is repeatedly executed at a predetermined control cycle.

As shown in FIG. 11, in step S410, the controller 120 acquires sensor information from the abnormality detection sensor 342 and proceeds to step S420.

In step S420, the controller 120 determines whether an abnormality has occurred based on the sensor information acquired in step S410. If it is determined in step S420 that an abnormality has occurred, the process proceeds to step S430. If it is determined in step S420 that no abnormality has occurred, the processing shown in the flowchart of FIG. 11 for this control cycle is terminated.

In step S430, the controller 120 determines whether it is in a remote control state based on the operation position of the mode selecting switch 51. The controller 120 determines that it is in a remote control state if the mode selecting switch 51 is in the remote control position, and proceeds to step S470. The controller 120 determines that it is in an onboard operation state if the mode selecting switch 51 is in the onboard operation position, and proceeds to step S480.

In step S470, the controller 120 refers to the notification table in the nonvolatile memory and determines whether the type of notification associated with the abnormality that occurred in step S420 is an indoor-only notification. If it is determined in step S470 that the type of notification is an indoor-only notification, the process proceeds to step S473. If it is determined in step S470 that the type of notification is not an indoor-only notification, i.e., it is an outdoor-only notification or an indoor-outdoor common notification, the process proceeds to step S476.

In step S473, the controller 120 decides not to notify the abnormality and records this in the nonvolatile memory. In step S476, the controller 120 sends an abnormality occurrence signal to the wireless control device 305. The terminal controller 54 of the wireless control device 305 outputs the abnormality occurrence signal to the terminal notification device 340. The terminal notification device 340 notifies the operator operating the wireless operation device 305 of an abnormality according to an abnormality occurrence signal. In other words, when in a remote control state, no notification is made to the interior of the operating room 7 even if an abnormality occurs. If it is in a remote control state and the type of notification associated with the abnormality is an outdoor-only notification or an indoor-outdoor common notification, the operator is notified of the abnormality via the wireless control device 305.

In step S480, the controller 120 refers to the notification table in the nonvolatile memory and determines whether the type of notification associated with the abnormality that occurred in step S420 is an outdoor-only notification. If it is determined in step S480 that the type of notification is an outdoor-only notification, the process proceeds to step S483. If it is determined in step S480 that the type of notification is not an outdoor-only notification, **i.e.,** it is an indoor-only notification or an indoor-outdoor common notification, the process proceeds to step S486.

In step S483, the controller 120 decides not to notify the abnormality and records this in the nonvolatile memory. In step S486, the controller 120 outputs an abnormality occurrence signal to the notification device 240. The notification device 240 notifies the operator onboard in the operating room 7 of the abnormality corresponding to the abnormality occurrence signal. In other words, when in an onboard operation state, no abnormality occurrence signal is sent to the wireless control device 305 even if an abnormality occurs. If it is in an onboard operation state and the type of notification associated with the abnormality is an indoor-only notification or an indoor-outdoor common notification, the operator is notified of the abnormality by the notification device 240.

According to the third embodiment, in addition to the same effects as the first embodiment, the following effects are achieved.

The hydraulic excavator 1 includes an abnormality detection sensor 342 that detects abnormalities, a notification device 240 that notifies the interior of the operating room 7 when an abnormality is detected by the abnormality detection sensor 342, and a controller 120 that controls the notification device 240. The controller 120 determines whether it is in a remote control state when an abnormality is detected. The controller 120 changes the notification information depending on whether it is in a remote control state or an onboard operation state.

For example, if a seatbelt unfastened abnormality is detected while in a remote control state, the notification information is disabled. If a seatbelt unfastened abnormality is detected while in an onboard operation state, the notification information is enabled. According to this configuration, abnormalities unrelated to remote control are disabled.

If the condition is remote operation and an abnormality of the seat belt not being fastened is detected, the notification device 240 and the terminal notification device 340 will alert the worker, who will then interrupt their work and check the abnormality that occurred in the hydraulic excavator 1.

In contrast, in this embodiment, when an abnormality unrelated to remote control occurs while in a remote control state, no notification regarding that abnormality is made (step S473). As a result, situations that would lead to the interruption of the worker's work as described above can be prevented.

If an abnormality related to remote control occurs while in a remote control state, the terminal notification device 340 of the wireless control device 305 appropriately notifies the abnormality (step S476).

If an abnormality related to onboard operation occurs while in an onboard operation state, the notification device 240 inside the operating room 7 appropriately notifies the abnormality (step S486). On the other hand, if an abnormality unrelated to onboard operation occurs while in an onboard operation state, no notification regarding that abnormality is made (step S483). As a result, the operator's operation is not hindered, and work efficiency is improved.

### <Modification Example of the Third Embodiment>

In the third embodiment, an example was described in which the controller 120 determines whether it is in a remote control state or an onboard operation state based on the operation position of the mode selecting switch **51.** However, the method of determining the operation state is not limited to this. The controller 120 may determine that it is in a remote control state when the operation mode is a remote control mode, and determine that it is in an onboard operation state when the operation mode is an onboard operation mode.

The following modification examples are also within the scope of the present invention.

### <Modification Example 1>

In the above embodiment, an example was described in which the remote control device that performs remote control is a wireless control device 5,305 that transmits operation signals to the hydraulic excavator 1 wirelessly. However, the remote control device may be a wired control device that transmits operation signals to the hydraulic excavator 1 via a wired connection. Additionally, the remote control device may have both the capability to transmit operation signals wirelessly and the capability to transmit operation signals via a wired connection.

### <Modification Example 2>

In the above embodiment, an example was described in which the remote control device is a portable wireless control device 5,305 that the operator can carry. However, the remote control device may be a fixed (stationary) type. This remote control device may be installed in a remote control operating room that simulates the interior of the operating room 7, for example, at a location away from the work site.

The remote control device includes an operation device similar to the indoor operation device 34, a driver's seat, and a display monitor positioned in front of the driver's seat. The remote control device is connected to a server. The server transmits the operation signals of the remote control device to the hydraulic excavator 1 via a wide area network. The server also acquires image data, operation information data, etc., transmitted from the hydraulic excavator 1 and displays them on the display monitor. In this configuration, the hydraulic excavator 1 is equipped with a surrounding monitoring device that includes multiple imaging devices. The imaging devices are, for example, wide-angle video cameras equipped with imaging elements such as CCD (Charge Coupled Device) or CMOS (Complementary Metal Oxide Semiconductor) that are excellent in durability and weather resistance, and wide-angle lenses. Multiple imaging devices are mounted on the swing body 3 and capture images of the front, rear, left, and right of the swing body 3. The vehicle body controller 100 transmits the captured image data, which is the data of the images captured by the imaging devices, to the server via a wide area network.

### <Modification Example 3>

In the above embodiment, an example was described in which the actuators driving the work device 10, the swing body 3, and the travel body 2 are hydraulic actuators, but the present invention is not limited to this. The actuators driving the work device 10, the swing body 3, and the travel body 2 may be electric actuators that operate using electric power.

### <Modification Example 4>

In the above embodiment, the case where the work machine is a crawler-type hydraulic excavator was described as an example, but the present invention is not limited thereto. The present invention can be applied to various work machines such as wheel-type hydraulic excavators, wheel loaders, and crawler cranes.

The embodiments of the present invention have been described above, but the above embodiments merely show some examples of application of the present invention, and are not intended to limit the technical scope of the present invention to the specific configurations of the above embodiments. The above embodiments have been described in detail to facilitate understanding of the present invention, and the present invention is not necessarily limited to all the configurations described. Furthermore, it is possible to replace part of the configuration of one embodiment (including modification examples) with the configuration of another embodiment (including modification examples), and it is also possible to add the configuration of another embodiment to the configuration of one embodiment.

### Description of Reference Characters

1: Hydraulic excavator (work machine)
2: Travel body
2a: Travel motor (hydraulic actuator)
3: Swing body
3a: Swing motor (hydraulic actuator)
4: Vehicle body (machine body)
5: Wireless operation device (remote control device)
6: Engine room
7: Operating room
10: Work device
11: Boom
11a: Boom cylinder (hydraulic cylinder, hydraulic actuator)
12: Arm
12a: Arm cylinder (hydraulic cylinder, hydraulic actuator)
13: Bucket
13a: Bucket cylinder (hydraulic cylinder, hydraulic actuator)
17: Speaker (notification device)
18: Touch panel monitor (notification device)
20: Wireless receiver
22: External notification light (alarm device)
23: External notification horn (alarm device)
31: Main pump (hydraulic pump)
32: Pilot pump (pilot hydraulic source)
33: Electromagnetic proportional valve (reducing valve)
34: Indoor operation device
34a: Indoor control lever
34b: Operation sensor
36: Lock valve
37: Hydraulic cylinder (hydraulic actuator)
38: Pilot line (oil passage)
40: Flow control valve (control valve)
51: Mode switching switch (mode selecting operation part)
52: Wireless communication device
53: Engine start switch
54: Terminal controller
60: Gate lock lever device
60a: Gate lock lever
60b: Operation position sensor
80: Engine (prime mover)
80a: Speed sensor
80b: Fuel injection device
90: Remote control system
100: Vehicle body controller (control device)
110: Remote control controller (control device)
120: Controller
130: Engine controller (control device)
240: Notification device
241: Human detecting sensor
242: Abnormality detection sensor
291: Notification system
305: Wireless operation device (remote control device)
320: Communication device
340: Terminal notification device
342: Abnormality detection sensor
355: Terminal monitor
356: Terminal speaker
390: Remote control system
391: Notification system
A1 to A4: Remote control lever
B1 to B4: Indoor control lever

## Claims

1. The work machine comprising;
a work device, a prime mover as a power source, an indoor operation device installed inside the operating room, and a mode selecting operation part that switches to either an onboard operation mode where the operation of the work device by the indoor operation device is effective or a remote control mode where the operation of the work device by the remote control device is effective;
a controller that controls the operation of the work device according to the operation of the indoor operation device when the operation mode is switched to the onboard operation mode by the mode selecting operation part, and controls the operation of the work device according to the operation of the remote control device when the operation mode is switched to the remote control mode by the mode selecting operation part;
when the first mode switching operation is performed to switch from the onboard operation mode to the remote control mode by the mode selecting operation part, the time until the controller enables the operation of the work device by the remote control device is longer in the second time when the first mode switching operation is performed during the operation of the prime mover than in the first time when the first mode switching operation is performed during the non-operation of the prime mover.

2. The work machine according to claim 1;
wherein the controller, when the first mode selecting operation is performed during the operation of the prime mover, stops the operation of the prime mover and then switches from the onboard operation mode to the remote control mode.

3. The work machine according to claim 2;
wherein the work machine includes a hydraulic pump driven by the prime mover, a hydraulic actuator that drives the work device by hydraulic oil supplied from the hydraulic pump, a control valve that controls the flow of hydraulic oil supplied from the hydraulic pump to the hydraulic actuator, a reducing valve that outputs pilot pressure to drive the control valve using the pressure of the pilot hydraulic source as the base pressure, and a lock valve installed in the oil passage connecting the pilot hydraulic source and the reducing valve;
the controller switches from the onboard operation mode to the remote control mode after blocking the oil passage with the lock valve when the first mode switching operation is performed during the operation of the prime mover.

4. The work machine according to claim 1;
wherein the third time until the controller enables the operation of the work device by the indoor operation device is shorter than the first time when the second mode switching operation is performed to switch from the remote control mode to the onboard operation mode by the mode selecting operation part.

5. The work machine according to claim **4;**
wherein the work machine includes a hydraulic pump driven by the prime mover, a hydraulic actuator that drives the work device by hydraulic oil supplied from the hydraulic pump, a control valve that controls the flow of hydraulic oil supplied from the hydraulic pump to the hydraulic actuator, a reducing valve that outputs pilot pressure to drive the control valve using the pressure of the pilot hydraulic source as the base pressure, and a lock valve installed in the oil passage connecting the pilot hydraulic source and the reducing valve;
the controller switches from the remote control mode to the onboard operation mode after blocking the oil passage with the lock valve when the second mode switching operation is performed.

6. The work machine according to claim **5;**
wherein the work machine includes a lock lever installed in the operating room, which can be switched to either a lock position or an unlock position;
the lock valve blocks the oil passage when the lock lever is switched to the lock position and opens the oil passage when the lock lever is switched to the unlock position;
the controller, when the second mode selecting operation is performed, switches from the remote control mode to the onboard operation mode after blocking the oil passage with the lock valve, even if the lock lever has been switched to the lock release position. At the same time, the state of the oil passage being blocked by the lock valve is maintained until the lock lever is switched from the lock release position to the lock position and then switched back to the lock release position.

7. The work machine according to claim 2;
wherein the work machine includes an alarm device that notifies the start of the prime mover;
the controller stops the operation of the prime mover when the first mode switching operation is performed during the operation of the prime mover, and starts the prime mover after performing an alarm by the alarm device for a predetermined time when a prime mover start command transmitted from the remote control device is received.
